# EUROPÄISCHE PATENTSCHRIFT

(11) **EP 3 921 131 B1**
(45) Veröffentlichungstag und Bekanntmachung des Hinweises auf die Patenterteilung: **06.07.2022**
(21) Anmeldenummer: 19809799.0
(22) Anmeldetag: 26.11.2019
(51) Int. Cl.: B29C 48/90, B33Y 80/00, B22F 3/105, B22F 5/10, B33Y 50/00, B29C 48/09

(54) **LAMELLENBLOCK MIT INNENTEMPERIERUNG**
LAMELLA BLOCK WITH INTERNAL TEMPERATURE CONTROL
BLOC DE LAMELLES COMPRENANT UNE THERMORÉGULATION INTERNE

(30) Priorität: 21.03.2019 DE 102019002004
(43) Veröffentlichungstag der Anmeldung: 15.12.2021
(73) Patentinhaber: KraussMaffei Technologies GmbH, 80997 München (DE)
(72) Erfinder: ESSWEIN, Michael, 85375 Neufahrn (DE); BREUNING, Walter, 85232 Bergkirchen (DE); ALTMANN, Aron, 80805 München (DE)
(74) Vertreter: Wilhelm, Ludwig
(86) Internationale Anmeldenummer: PCT/EP2019/082511
(87) Internationale Veröffentlichungsnummer: WO 2020/187434

(56) Entgegenhaltungen:
- EP-A2- 2 085 207
- DE-A1-102009 016 100
- DE-B3-102005 002 820
- US-A1- 2003 211 657
- US-A1- 2018 361 502
- US-B1- 6 200 119
- Christian Hopmann ET AL: "Surface quality of profile extrusion dies manufactured by Selective Laser Melting -", RTejournal - Forum für Rapid Technologie, 17. Mai 2016 (2016-05-17), Seiten 1-7, XP055668016, Köln Gefunden im Internet: URL:https://www.rtejournal.de/ausgabe12/42 90/view?set_language=en [gefunden am 2020-02-12]

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, deren Lamellen ineinandergreifen können. Die ineinandergreifenden Lamellenblöcke bilden einen Kalibrierkorb mit kreisförmiger Kalibrieröffnung, durch welche die zu kalibrierenden Rohre geführt werden (vgl. insbesondere die Figuren 1 und 2 der DE 198 43 340 C2). Ferner ist jeder Lamellenblock mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2).

Weiterer technologischer Hintergrund ist in der US 6,200,119 B1, DE 10 2005 002 820 B3, EP 2 085 207 A2 und der DE 10 2009 016 100 A1 zu finden.

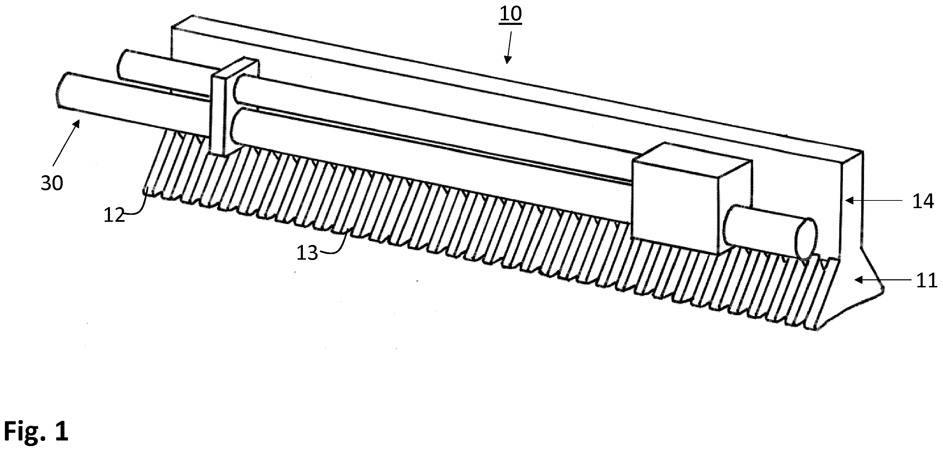

Abweichend von den oben beschriebenen gefädelten Lamellenblöcken sind ferner Lamellenblöcke mit geschlossenen Trägerstrukturen (bzw. Rückenstrukturen) bekannt. Figur 1 zeigt ein Beispiel eines derartigen Lamellenblocks. Der Lamellenblock 10 umfasst eine Lamellenstruktur 11 und eine blockförmig ausgebildete Trägerstruktur 14. Die Lamellenstruktur 11 umfasst eine Vielzahl von Lamellen 12, die durch Nuten 13 voneinander beabstandet und entlang der Trägerstruktur 14 angeordnet sind. Die blockförmige Trägerstruktur 14 ist hierbei in der Form eines massiven Körpers (z.B. stabförmiger Körper) realisiert. Ferner ist die Trägerstruktur 14 mit den Lamellen 12 einstückig ausgebildet. Der Lamellenblock 10 umfasst ferner eine an der Trägerstruktur 14 außen angebrachte rohrförmige Kühlwasserzuführung 30. Durch die Kühlwasserzuführung 30 kann Kühlwasser zur Kühlung der Lamellen 12 geleitet werden. Über Sprühöffnungen an der Kühlwasserzuführung kann Kühlwasser auf die Lamellen 12 bzw. das zu kalibrierende Produkt gesprüht werden. Ein Nachteil der in Figur 1 gezeigten außenliegenden Kühlwasserzuführung 30 ist, dass diese relativ aufwendig zu realisieren ist.

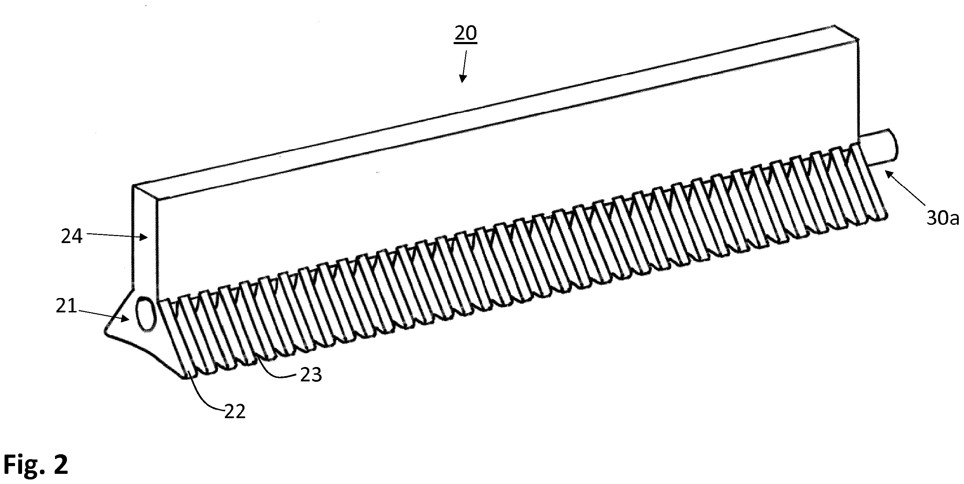

In Zusammenhang mit Figur 2 wird ein weiteres Beispiel eines bekannten Lamellenblocks 20 dargestellt. Der Lamellenblock 20 weist wiederum eine Trägerstruktur 24 sowie eine Lamellenstruktur 21 auf. Die Lamellenstruktur 21 umfasst eine Vielzahl von Lamellen 22, die durch Nuten 23 voneinander beabstandet und entlang der Trägerstruktur 24 angeordnet sind. Die Trägerstruktur 24 sowie die Lamellen 22 sind im Wesentlichen gleich ausgebildet wie in dem in Figur 1 gezeigten Lamellenblockdesign. Der wesentliche Unterschied zwischen dem Lamellenblockdesign in Figur 1 und jenem in der Figur 2 besteht in der Anordnung der Kühlwasserzuführung. Die Kühlwasserzuführung 30a ist in dem in der Figur 2 gezeigten Lamellenblockdesign in der Form eines Rohrs mit Sprühöffnungen ausgebildet, das am Übergang zwischen der Trägerstruktur 24 und der Lamellenstruktur 22 angeordnet ist. Bei der Kühlwasserzuführung 30a handelt es sich um eine thermisch getrennte, innenliegende Kühlwasserzuführung, da das im Rohr geleitet Kühlwasser durch die Rohrhülle vom Lamellenblock getrennt ist.

Der Nachteil der in den Figuren 1 und 2 gezeigten Kühlwasserzuführungen 30, 30a liegt darin, dass die Lamellenblöcke 10, 20 durch die Kühlwasserzuführungen 30, 30a selbst keine nennenswerte Kühlung/Temperierung erfahren. Vielmehr werden die Lamellenblöcke 10, 20 nur durch das Sprühwasser und das Planschen in einem Kühlwassersumpf eines Kalibrierkorbs gekühlt bzw. temperiert.

Es ist daher Aufgabe der vorliegenden Erfindung, einen Lamellenblock für eine Kalibriereinrichtung bereitzustellen, welcher die im Zusammenhang mit dem Stand der Technik aufgezeigten Probleme weiter reduziert bzw. beseitigt. Insbesondere ist es Aufgabe der vorliegenden Erfindung, einen Lamellenblock bereitzustellen, welcher eine verbesserte Temperierung (Kühlung) des Lamellenblocks bereitstellt.

Zur Lösung der oben genannten Aufgabe wird ein Lamellenblock für eine Kalibriereinrichtung zur Kalibrierung eines extrudierten Kunststoffprofils bereitgestellt. Der Lamellenblock umfasst eine Lamellenstruktur, welche eine Vielzahl von Lamellen aufweist, die durch Nuten voneinander beabstandet und in Längsrichtung des Lamellenblocks angeordnet sind. Der Lamellenblock weist wenigstens einen Kanal zum Zuführen eines Temperierfluids auf, wobei der wenigstens eine Kanal im Lamellenblock integriert ausgebildet ist.

Mit im Lamellenblock integriert ausgebildetem Kanal kann gemeint sein, dass der wenigstens eine Kanal im Inneren des Lamellenblock ausgebildet ist. Der wenigstens eine Kanal kann als (länglicher) Hohlraum im Inneren des Lamellenblocks ausgebildet sein. Der Hohlraum wird in Umfangsrichtung vom Lamellenblock umgeben (begrenzt). Dadurch ist der Hohlraum im direkten Kontakt mit dem Lamellenblock. Der Hohlraum besitzt keine eigenständige Ummantelung. Durch den direkten Kontakt des Lamellenblocks mit dem Hohlraum (Kanal) wird eine direkte thermische Kopplung zwischen dem im Kanal geführten Temperierfluid und der Lamellenblockumgebung ermöglicht. Somit kann der Lamellenblock über den wenigstens einen Kanal auf effiziente Weise temperiert (gekühlt oder geheizt) werden.

Der wenigstens eine Kanal kann eine oder mehrere Sprühöffnungen aufweisen. Sind mehrere Sprühöffnungen vorgesehen, so können diese entlang des Kanals verteilt angeordnet sein. Eine jede Sprühöffnung kann derart ausgestaltet sein, dass sie lediglich einen Teil des im Kanal geleiteten Fluids zum Temperieren des Lamellenblocks austreten lässt. Die Sprühöffnungen können hierfür variable Öffnungsquerschnitte aufweisen. Form und Abmessungen der Öffnungsquerschnitte können von Öffnung zu Öffnung variieren. Somit können entlang des Lamellenblocks unterschiedliche Teilströme zum Temperieren (der Lamellen bzw. des zu kalibrierenden Produkts) entnommen werden.

Der wenigstens eine Kanal kann innerhalb des Lamellenblocks derart ausgebildet sein, dass er wenigstens einem vorgegebenen Pfad folgt. Der wenigstens eine Pfad kann geradlinig und/oder gekrümmt verlaufend ausgebildet sein. Somit kann der wenigstens eine Kanal innerhalb des Lamellenblocks geradlinig und/oder gekrümmt verlaufend ausgebildet sein.

Der wenigstens eine Kanal kann ferner derart ausgebildet sein, dass der wenigstens eine Kanal (quer zur Pfadrichtung) einen variablen Querschnitt aufweist. Der Querschnitt des wenigstens einen Kanals kann entlang des Pfads kontinuierlich (diskontinuierlich) variieren. Die Variation des Querschnitts entlang des Pfads kann hierbei von der Beschaffenheit des Lamellenblocks abhängen. Form und/oder Abmessung (Durchmesser) des Kanalquerschnitts können an die Abmessungen des Lamellenblocks, in welchem der wenigstens eine Kanal integriert ist, angepasst sein.

Der Kanal kann im Querschnitt eine beliebige Form aufweisen. Die Querschnittsform des Kanals kann kreisrund, elliptisch, rechteckig oder einer anderweitige polygone Form aufweisen.

Gemäß einer Variante kann der wenigstens eine Kanal im Lamellenblock schleifenartig ausgebildet sein. Der wenigstens eine Kanal kann hierbei eine oder mehrere Schleifen realisieren. Eine schleifenartige Ausbildung des wenigstens einen Kanals kann zu einer effektiveren Temperierung (Kühlung oder Heizung) des Lamellenblocks beitragen.

Der wenigstens eine Kanal kann ferner derart ausgebildet sein, dass er sich an einer vorgegebenen ersten Position im Lamellenblock in zwei oder mehrere Teilkanäle aufteilt. Genauso können die zwei oder mehreren Teilkanäle sich an einer vorgegebenen zweiten Position im Lamellenblock wieder zu einem Kanal vereinigen. Die Aufteilung eines Kanals in zwei oder mehrere Teilkanäle kann von den Abmessungen und vom Design des Lamellenblocks abhängen. Insbesondere kann eine Kanalaufteilung in mehrere Teilkanäle mit jeweils kleinerem Kanalquerschnitt sinnvoll sein, um den Kanal um Lamellenabschnitte herumzuführen, die nicht von dem Kanal durchdrungen werden dürfen (beispielsweise im Lamellenblock ausgebildete Gewindebohrungen).

Der wenigstens eine Kanal kann Teil eines Temperierkreislaufs sein. Mit Temperierkreislauf kann ein geschlossener oder offener Kreislauf gemeint sein, in dem Temperierfluid (wie beispielsweise Wasser) zur Kühlung und/oder zur Erwärmung des Lamellenblocks zirkuliert. Somit kann der Kanal als Teil des Temperierkreislaufs dazu vorgesehen sein, den Lamellenblock bzw. die Lamellen des Lamellenblocks auf eine vorgegebene gewünschte Temperatur zu kühlen bzw. zu erwärmen.

Der Lamellenblock kann ferner eine Trägerstruktur aufweisen, an der die Lamellen der Lamellenstruktur befestigt sind. Ferner kann der wenigstens eine Kanal in der Trägerstruktur integriert ausgebildet sein. Mit integriert ausgebildet kann gemeint sein, dass der wenigstens eine Kanal innerhalb der Trägerstruktur ausgebildet ist.

Die Trägerstruktur kann mit den Lamellen bzw. der Lamellenstruktur einstückig ausgebildet sein. Alternativ können die Lamellenstruktur bzw. die Lamellen sowie die Trägerstruktur jeweils separat gefertigt sein. Die Lamellenstruktur bzw. Lamellen kann (können) dann mit der Trägerstruktur entsprechend verbunden sein.

Die Trägerstruktur und die Lamellen können aus demselben Material oder aus verschiedenen Materialien gefertigt sein. Gemäß einer Variante kann das Material, aus dem die Trägerstruktur und/oder die Lamellen gefertigt sind, aus einem metallischen Werkstoff gefertigt sein. Denkbar ist jedoch auch die Verwendung eines polymeren Werkstoffs (mit Additiven).

Der oben beschriebene Lamellenblock wird bevorzugt mittels 3D-Druck hergestellt. Die Anwendung einer 3D-Druck-Technik ermöglicht eine kostengünstige und schnelle Herstellung von Lamellenblöcken, wobei jede beliebige Kanalgeometrie realisierbar ist. Gemäß einem weiteren Aspekt der Erfindung wird eine Kalibriereinrichtung zur Kalibrierung von extrudierten Kunststoffprofilen bereitgestellt, wobei die Kalibriereinrichtung eine Vielzahl der erfindungsgemäßen Lamellenblöcke aufweist, die zur Bildung einer Kalibrieröffnung zueinander angeordnet sind. Die Anordnung der Lamellenblöcke kann dabei derart sein, dass diese eine kreisrunde Kalibrieröffnung bilden.

Die Kalibriereinrichtung kann einen Temperierkreislauf zum Zuführen von Temperierfluid umfassen. Der Temperierkreislauf kann eine Einrichtung zum Bereitstellen von Temperierfluid sowie ein Leitungssystem zum Zuführen des bereitgestellten Temperierfluids an die einzelnen Lamellenblöcke umfassen. Das Leitungssystem kann mit den Kanälen der Lamellenblöcke fluidisch gekoppelt sein. Die Kanäle können so Teil des Temperierkreislaufes sein.

Die Kalibriereinrichtung kann ferner eine Vielzahl von Betätigungseinrichtungen umfassen, wobei jede Betätigungseinrichtung jeweils mit einem Lamellenblock gekoppelt ist, um einen jeden Lamellenblock individuell zu betätigen. Durch die Betätigungseinrichtung kann jeder Lamellenblock radial zur Kalibrieröffnung individuell betätigt werden. Dadurch kann der Wirkquerschnitt der Kalibrieröffnung nach Bedarf an den Querschnitt (Durchmesser) des zu kalibrierenden Profils angepasst werden.

Ferner kann die Kalibriereinrichtung ein Gehäuse aufweisen, das zur Aufnahme und Lagerung der Betätigungseinrichtung und der mit der Betätigungseinrichtung gekoppelten Lamellenblöcke vorgesehen ist.

Gemäß einem weiteren Aspekt der Erfindung wird ein Verfahren zum Herstellen eines Lamellenblocks wie oben beschrieben bereitgestellt. Das Verfahren zum Herstellen des Lamellenblocks umfasst wenigstens den Schritt des Herstellens des Lamellenblocks mittels 3D-Druck oder mittels additiver Fertigung. Die Herstellung des Lamellenblocks mittels 3D-Druckverfahren oder additiver Fertigungsverfahren kann hierbei ein schichtweises Lasersintern oder Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer 3D-Lamellenblockgeometrie (CAD-Daten) umfassen. Ferner kann das Verfahren den Schritt des Umwandelns der 3D-Geometriedaten in entsprechende Steuerbefehle für den 3D-Druck umfassen.

Der Schritt des Berechnens einer 3D-Lamellenblockgeometrie kann den Schritt des Berechnens einer Kanalgeometrie (Kanalquerschnitt, Kanalverlauf entlang eines Pfades) und der Anordnung des Kanals innerhalb des Lamellenblocks umfassen. Die Berechnung von Kanalgeometrie und Kanalanordnung kann unter Berücksichtigung der Beschaffenheit des Lamellenblocks (Blockgeometrie, Blockmaterial, Kühlbedarf) erfolgen. Insbesondere kann die Geometrie und Anordnung des wenigstens einen Kanals an die Beschaffenheit des Lamellenblocks angepasst sein.

Gemäß einem weiteren Aspekt wird ein Verfahren zum Herstellen eines Lamellenblocks bereitgestellt, das die Schritte umfasst: Erstellen eines Datensatzes, welcher den wie oben beschrieben Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschrieben Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschrieben Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Gemäß einem weiteren Aspekt wird ein Datensatz bereitgestellt, welcher den wie oben beschrieben Lamellenblock abbildet. Der Datensatz kann auf einem computerlesebaren Datenträger gespeichert sein.

Weitere Vorteile, Einzelheiten und Aspekte der vorliegenden Erfindung werden anhand der nachfolgenden Zeichnungen weiter diskutiert. Es zeigen:
- Fig. 1: einen Lamellenblock für eine Kalibriereinrichtung gemäß dem Stand der Technik;
- Fig. 2: einen weiteren Lamellenblock für eine Kalibriereinrichtung gemäß dem Stand der Technik;
- Fign. 3a-3c: Ansichten eines Lamellenblocks gemäß der vorliegenden Erfindung;
- Fig. 4: eine Ansicht eines weiteren Lamellenblocks gemäß der vorliegenden Erfindung;
- Fig. 5: ein Blockdiagramm eines Verfahrens zur Herstellung des erfindungsgemäßen Lamellenblocks; und
- Fig. 6: eine Schnittansicht einer Kalibriereinrichtung gemäß der vorliegenden Erfindung.

Die Figuren 1 und 2 wurden bereits im Zusammenhang mit dem Stand der Technik eingangs diskutiert. Es sei auf die dortige Beschreibung verwiesen.

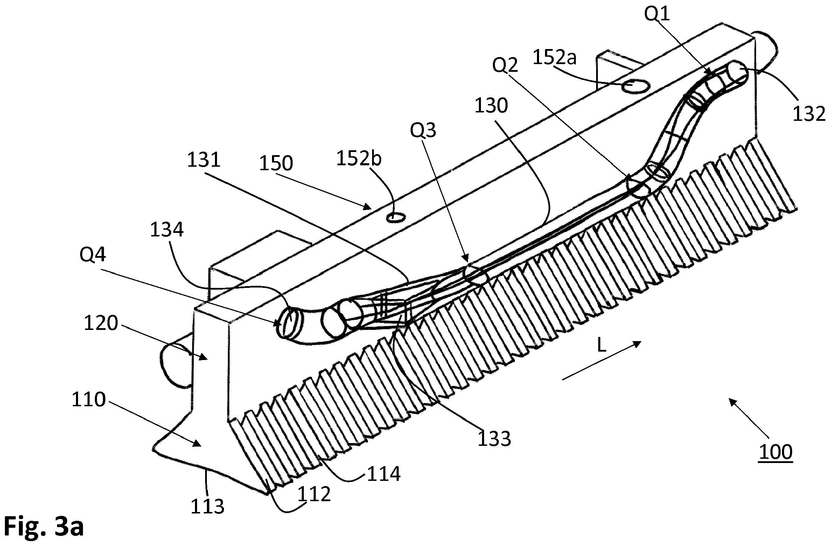

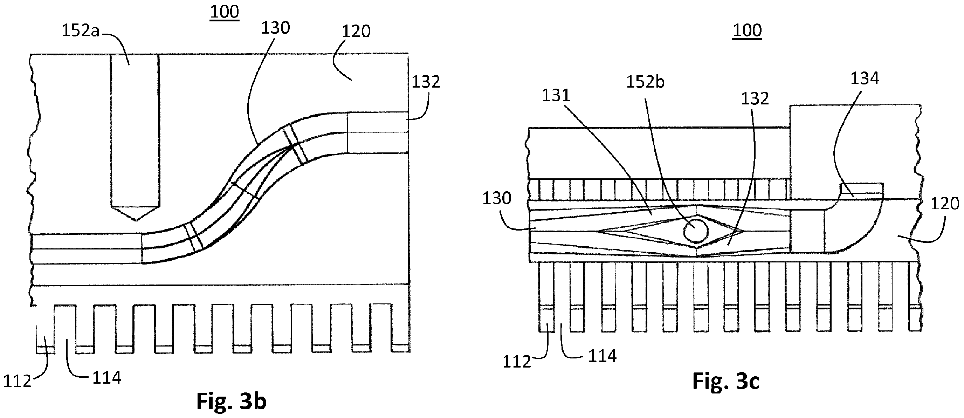

Im Zusammenhang mit den Figuren 3a und 3b wird nun ein Beispiel eines erfindungsgemäßen Lamellenblocks 100 näher beschrieben.

Der Lamellenblock 100 umfasst eine Trägerstruktur 120 sowie eine Lamellenstruktur 110, die eine Vielzahl von Lamellen 112 aufweist. Die Trägerstruktur 120 fungiert als Träger für die Lamellenstruktur 110. Ferner umfasst der Lamellenblock 100 wenigstens einen Kanal 130. Der wenigstens eine Kanal 130 wird nachstehend noch im Detail beschrieben.

Im Folgenden wird nun die Lamellenstruktur 110 des Lamellenblocks 100 weiter beschrieben. Die Lamellenstruktur 110 umfasst eine Vielzahl von Lamellen 112, die in Längsrichtung L des Lamellenblocks 100 voneinander beanstandet angeordnet sind (siehe Figur 3a). Benachbarte Lamellen 112 sind durch entsprechende Nuten 114 voneinander getrennt. Jede Lamelle 112 weist ein im Querschnitt zur Längsrichtung L dreiecksförmiges Profil auf. Ferner weist jede Lamelle 112 eine der Trägerstruktur 120 abgewandte Lamellenfläche 113 auf, die leicht gekrümmt ausgebildet ist. Die Lamellenfläche 113 ist dem zu kalibrierenden Profil zugewandt. Sie bildet die Kontaktfläche mit dem zu kalibrierenden Profil. Je nach Anwendung kann der Lamellenblock 100 auch eine anderweitige Lamellenform aufweisen, die von dem hier beschriebenen dreieckförmigen Querschnittsprofil abweichen kann. Ebenso kann die dem zu kalibrierenden Profil zugewandte Lamellenfläche 113 flach sein oder eine anderweitige Krümmung aufweisen.

Die Trägerstruktur 120 ist als massiver Körper (Block) ausgebildet (im Folgenden Trägerblock 120 genannt). Der Trägerblock 120 weist im Querschnitt senkrecht zur Längsrichtung *L* ein rechteckförmiges Profil auf. Anderweitige, von einem rechteckförmigen Querschnittsprofil abweichende Profile sind ebenso denkbar. Der Trägerblock 120 weist ferner an seiner den Lamellen gegenüberliegenden Seite zwei Gewindebohrungen 152a, 152b auf. Die Gewindebohrungen 152a, 152b sind Teil einer Kopplungseinrichtung 150, die dazu vorgesehen ist, den Lamellenblock 100 mit einer entsprechenden Betätigungseinrichtung der Kalibriereinrichtung zu koppeln. Die Betätigungseinrichtung der Kalibriereinrichtung ist in Figur 3a nicht dargestellt.

Der Trägerblock 120 ist mit der Lamellenstruktur 110 einstückig ausgebildet. Alternativ hierzu ist auch denkbar, dass die Lamellen der Lamellenstruktur 110 als separate Elemente ausgebildet sind. In einem derartigen Fall werden die Lamellen 112 an der dem zu kalibrierenden Profil zugewandten Seite des Lamellenblocks 100 in Längsrichtung L entsprechend angeordnet und mit dem Trägerblock 120 entsprechend verbunden (z.B. durch Schweißen, Kleben).

Wie ferner aus der Figur 3a hervorgeht, weist der Lamellenblock 100 einen Kanal 150 auf, der im Inneren des Trägerblocks 120 verlaufend ausgebildet ist. Der im Inneren des Trägerblocks 120 verlaufende Kanal 130 weist zwei gegenüberliegende Austrittsöffnungen 132, 134 auf. Die erste Austrittsöffnung 132 ist an einer ersten Stirnseite des Trägerblocks 120 angeordnet, während die zweite Austrittsöffnung 134 an einer lateralen Seite des Trägerblocks 120 oder an einer der ersten Stirnseite gegenüberliegenden zweiten Stirnseite des Trägerblocks 120 angeordnet ist. An den beiden Austrittsöffnungen 132, 134 können Anschlusselemente vorgesehen sein, die zur fluidischen Kopplung mit einem Temperierkreislauf ausgebildet sind.

Der im Inneren des Trägerblocks 120 angeordnete Kanal 130 weist zwischen seinen beiden Austrittsöffnungen 134 einen vorgegebenen Kanalverlauf auf. Der Kanalverlauf kann derart ausgestaltet sein, dass der Kanal 130 in Längsrichtung L Abschnitte mit geradlinigem Verlauf und Abschnitte mit gekrümmten Verlauf aufweist.

Der in Figur 3a gezeigte Kanalverlauf ist lediglich beispielhaft. Der Kanal 130 kann zwischen seinen beiden Austrittsöffnungen 132, 134 einem beliebigen Pfad folgen. Der Kanalverlauf kann sich nach den strukturellen Gegebenheiten des den Kanal 130 aufnehmenden Trägerblocks 120 richten. Insbesondere kann der Kanal 130 innerhalb des Trägerblocks 120 seine Richtung ändern und/oder eine Aufteilung in zwei oder mehreren Teilkanälen 131, 133 aufweisen, um beispielsweise ein Hindernis zu umgehen.

Dieser Sachverhalt wird im Zusammenhang mit den Figuren 3b und 3c weiter verdeutlicht. Figur 3b zeigt eine vergrößerte Schnittansicht des in der Figur 3a dargestellten Lamellenblocks 100. Die Schnittansicht stellt lediglich den Lamellenblockbereich in der Nähe der Bohrung 152a dar. Der Verlauf des Kanals 130 ist in der Umgebung der Bohrung 152a gekrümmt ausgebildet. Durch den gekrümmten Verlauf kann der Kanal 130 an der Bohrung 152a herumgeführt werden.

Figur 3c zeigt eine vergrößerte Draufsicht auf den in Figur 3a dargestellten Lamellenblock 100. Die Ansicht in Figur 3c stellt lediglich den Lamellenblockbereich in der Nähe der Bohrung 152b dar. Wie aus der Figur 3c hervorgeht, teilt sich der Kanal 150 in der Nähe der Bohrung 152b in zwei Teilkanäle 131, 133 auf, welche die Bohrung 152b umrunden. Durch die Aufspaltung des Kanals 130 in zwei Teilkanäle 131, 133 mit jeweils kleinerem Kanalquerschnitt kann die Bohrung 152b problemlos umgangen werden. Die Summe der Querschnitte der beiden Teilkanäle 131, 133 kann hierbei unwesentlich kleiner als der Querschnitt des Kanals 130 vor und nach der Aufteilung sein. Somit wird sichergestellt, dass das Temperierfluids ohne nennenswerten Widerstand durch den Kanal 130 strömen kann.

Zurück zu Figur 3a. Wie ferner in Figur 3a exemplarisch angedeutet, kann der im Trägerblock 120 ausgebildete Kanal 130 variable Querschnitte Q1, Q2, Q3, Q4 aufweisen. Der Kanal 130 weist an und in der Nähe seiner ersten Austrittsöffnung 132 sowie an und in der Nähe seiner zweiten Austrittsöffnung 134 jeweils einen kreisrunden Querschnitt auf (vgl. Figur 3a, Kanalquerschnitte Q1 und Q4). Dazwischen weist der Kanal 130 zum Teil elliptische Querschnitte Q2, Q3 auf. Der Übergang von den kreisrunden Querschnitten Q1, Q4 zu den elliptischen Querschnitten Q2, Q3 kann kontinuierlich (stufenlos) erfolgen. Die gezeigten Querschnittsvariationen entlang des Kanals 130 sind beispielhaft. Kanäle mit anderen Querschnittsgeometrien (und Querschnittsvariationen) sind ebenso denkbar.

Die hier in Zusammenhang mit den Figuren 3a bis 3c beschriebene Kanalführung unterscheidet sich von herkömmlichen Bohrungen gemäß dem Stand der Technik darin, dass der Kanal 130 in seiner Querschnittsgeometrie sowie in seiner Kanalführung zwischen den beiden Austrittsöffnungen 132, 134 variabel ausgebildet ist. Insbesondere können der Kanalquerschnitt und/oder die Kanalführung innerhalb des Lamellenblocks 100 (Trägerblocks 120) an die Temperieranforderungen und an die geometrischen Gegebenheiten des Lamellenblocks 100 (Trägerblocks 120), in welchem der Kanal 130 aufgenommen ist, entsprechend angepasst (optimiert) sein. Ein weiterer Unterschied zum Stand der Technik besteht darin, dass der Kanal 130 als Hohlraum im Lamellenblock 100 (Trägerblock 120) realisiert ist, der mit der Umgebung des Lamellenblocks 100 (Trägerblocks 120) in direktem Kontakt steht. Somit kann das im Hohlraum geleitete Temperierfluid in direkten thermischen Kontakt mit dem Lamellenblock 100 kommen.

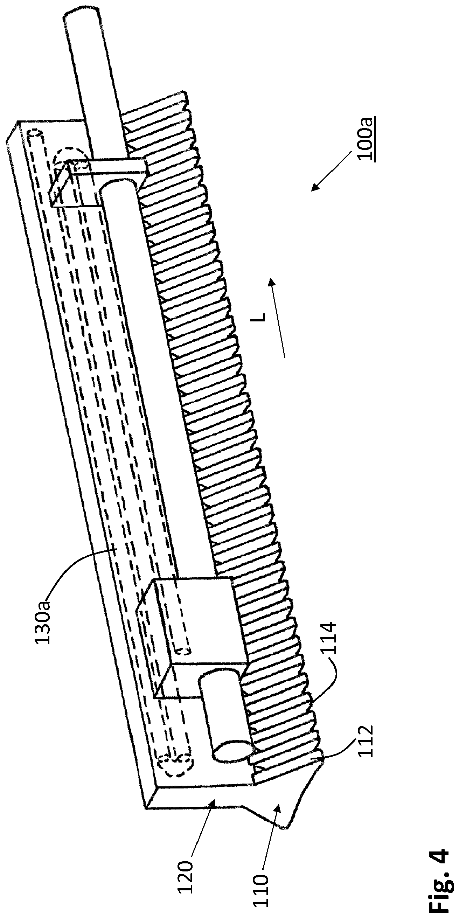

Im Zusammenhang mit Figur 4 wird eine weitere Implementierung eines Lamellenblocks 100a beschrieben. Der Lamellenblock 100a zeigt eine Lamellenstruktur 110 sowie eine Trägerstruktur 120, welche im Wesentlichen der Lamellenstruktur 110 und Trägerstruktur 120 des in den Figuren 3a-3c gezeigten Lamellenblocks 100 entsprechen. Sie sind daher mit denselben Bezugszeichen versehen. Es sei auf die entsprechende Beschreibung der Figuren 3a-3c weiter oben verwiesen. Der wesentliche Unterschied zwischen dem Lamellenblock 100a in der Figur 4 und dem Lamellenblock 100 der Figuren 3a-3b besteht in der Ausgestaltung des Kanals 130a. Der Kanal 130a ist in der in Figur 4 gezeigten Variante schleifenförmig ausgebildet. Er weist zwei Schleifen auf. Durch die schleifenförmige Ausbildung wird eine besonders gute thermische Ankopplung zwischen dem im Kanal 130a zirkulierenden Temperierfluid und dem Trägerblock 120 realisiert.

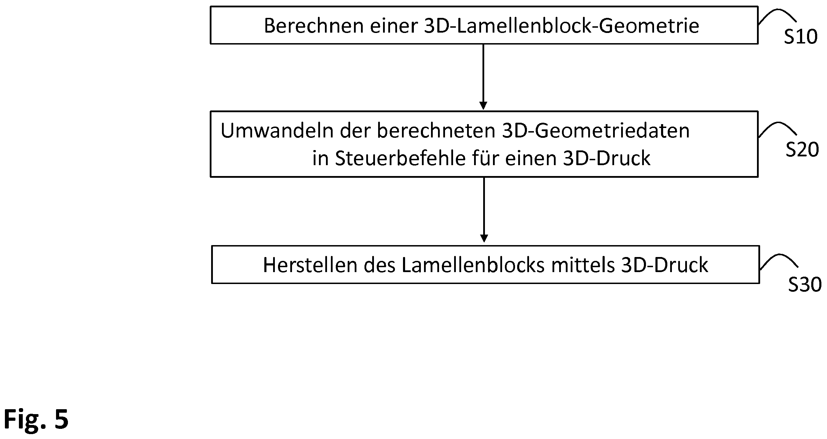

Zur Herstellung der oben beschriebenen Lamellenblöcke 100, 100a mit wenigstens einem Kanal zur Leitung von Temperierfluid kann ein generatives bzw. additives Fertigungsverfahren zum Einsatz kommen. Ein derartiges Herstellungsverfahren ist in Figur 5 gezeigt und wird im Folgenden näher beschrieben.

Demnach kommt ein 3D-Druckverfahren zum Einsatz. Hierbei wird in einem ersten Schritt S10 eine 3D-Lamellenblockgeometrie (CAD-Daten) berechnet. Die 3D-Lamellenblockgeometrie bzw. die die 3D-Lamellenblockgeometrie beschreibenden CAD-Daten beschreiben unter anderem auch die Geometrie und den Verlauf des im Lamellenblock auszubildenden wenigstens einen Kanals 130, 130a. Die Geometrie und der Verlauf des im Lamellenblock (Trägerblock) auszubildenden wenigstens einen Kanals 130, 130a können unter Berücksichtigung vorgegebener Modellparameter (wie beispielsweise die Geometrie des Lamellenblocks, Material des Lamellenblocks, thermische Eigenschaften des Lamellenblocks) für jeden Lamellenblock individuell berechnet werden.

In einem darauffolgenden zweiten Schritt S20 werden die berechneten 3D-Geometriedaten in Steuerbefehle zum Betreiben einer 3D-Druckeinrichtung umgewandelt. Die 3D-Druckeinrichtung kann zum Durchführen eines 3D-Druckverfahrens (z.B. ein Lasersinterverfahren oder Laserschmelzverfahren) ausgelegt sein.

Basierend auf den erzeugten Steuerbefehlen wird dann der Lamellenblock 100 mit Hilfe der 3D-Druckeinrichtung schichtweise aufgebaut (Schritt S30). Als Werkstoff für den 3D-Druck kann ein metallischer Werkstoff oder ein Polymerwerkstoff zum Einsatz kommen.

Das hier beschriebene 3D-Druckverfahren zur Herstellung der erfindungsgemäßen Lamellenblöcke 100, 100a ist vorteilhaft, da je nach Temperierbedarf oder anderweitigen Anforderungen, einer oder mehrere Kanäle mit variabler Geometrie und variablem Verlauf realisiert werden können. Der wenigstens eine Kanal muss nicht auf uniforme kreisrunde Bohrungen beschränkt bleiben, sondern kann in Abhängigkeit eines Temperierbedarfs (Kühlbedarf oder Heizbedarf) variabel ausgestaltet sein. Der Verlauf und die Geometrie des wenigstens einen Kanals kann für jeden Lamellenblock an die geometrischen Gegebenheiten des Lamellenblocks derart angepasst werden, dass der Block eine effektive Kühlung/Erwärmung erfährt.

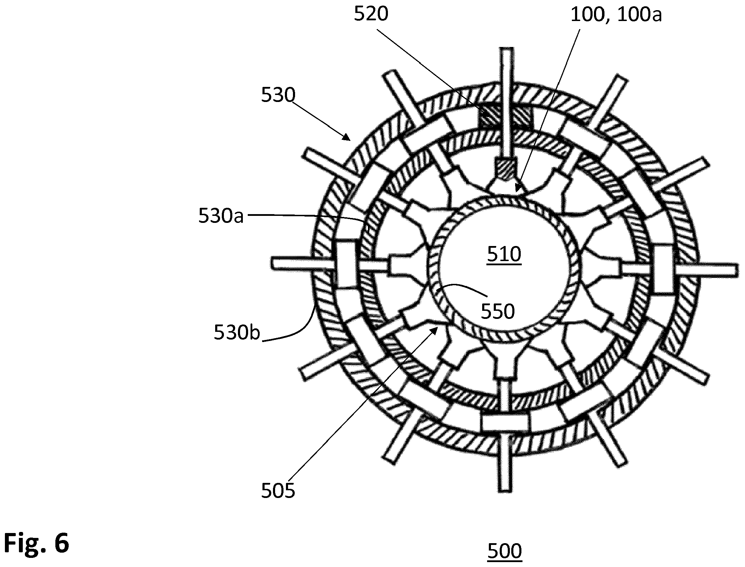

In Zusammenhang mit der Figur 6 wird eine Kalibriereinrichtung 500 zur Kalibrierung eines extrudierten Kunststoffprofils 550 beschrieben. Figur 6 zeigt eine Schnittansicht der Kalibriereinrichtung 500. Das zu kalibrierende Profil 550 ist in der in Figur 6 gezeigten Implementierung ein Rohrprofil.

Die Kalibriereinrichtung 500 umfasst eine Vielzahl der oben beschriebenen erfindungsgemäßen Lamellenblöcke 100, die in Umfangsrichtung der Kalibriereinrichtung 500 derart zueinander angeordnet sind, dass sie einen Kalibrierkorb 505 mit einer gewünschten Kalibrieröffnung 510 bilden. Wie ferner in Figur 5 schematisch angedeutet, können die benachbarten Lamellenblöcke 100 ineinandergreifend angeordnet sein. Die Lamellen 112 und Nuten 114 benachbarter Lamellenblöcke 100 sind hierfür in ihrer Anordnung und Abmessung (insbesondere in der Nutenbreite und Lamellenbreite) derart aufeinander abgestimmt, dass die Lamellen 112 benachbart angeordneter Lamellenblöcke 100 kammartig ineinander greifen können.

Ferner umfasst die Kalibriereinrichtung 500 eine Vielzahl von Betätigungseinrichtungen 520 (beispielsweise Linearaktoren), wobei jeweils eine Betätigungseinrichtung 520 mit einem Lamellenblock 100 gekoppelt ist. Die Betätigungseinrichtungen 520 sind dazu vorgesehen, die jeweiligen Lamellenblöcke 100 in radialer Richtung (also senkrecht zur Vorschubrichtung des zu kalibrierenden Profils) zu verschieben. Dadurch kann der Wirkquerschnitt der Kalibrieröffnung 510 an das zu kalibrierende Profil 550 entsprechend angepasst werden.

Ferner umfasst die Kalibriereinrichtung 500 ein Gehäuse 530 zur Aufnahme der Betätigungseinrichtungen 520 und der Lamellenblöcke 100. Das Gehäuse 530 kann zylinderförmig ausgebildet sein. Es kann einen inneren Gehäusezylinder 530a und einen äußeren Gehäusezylinder 530b aufweisen, wobei Komponenten der Betätigungseinrichtung 520 in dem Zwischenraum zwischen dem inneren Gehäusezylinder 530a und dem äußeren Gehäusezylinder 530b angeordnet sein können, ähnlich zu der in der DE 198 43 340 C2 beschriebenen Kalibriereinrichtung.

Die hier beschriebene flexible Ausgestaltung der Kanäle innerhalb des Lamellenblocks ermöglicht eine effiziente thermische Kopplung zwischen dem Temperierfluid und dem Lamellenblock 100. Dadurch, dass der Lamellenblock 100 mittels 3D-Druck hergestellt wird, ist jede mögliche Ausgestaltung und Variation des Kanals innerhalb des Lamellenblocks möglich. Neben der effektiveren Kühlung durch die hier beschriebenen Kanaldesigns wird ferner im Vergleich zum Stand der Technik kompakteres Design ermöglicht.

## Patentansprüche

1. Lamellenblock (100, 100a) zur Kalibrierung eines extrudierten Profils (550) innerhalb einer Kalibriereinrichtung (500), wobei der Lamellenblock (100, 100a) eine Lamellenstruktur (110) umfasst, welche eine Vielzahl von Lamellen (112) aufweist, die durch Nuten (114) voneinander beabstandet und in Längsrichtung (L) des Lamellenblocks (100, 100a) angeordnet sind, wobei der Lamellenblock (100, 100a) wenigstens einen Kanal (130, 130a) zum Zuführen eines Temperierfluids aufweist, **dadurch gekennzeichnet, dass** der wenigstens eine Kanal (130, 130a) im Lamellenblock (100, 100a) integriert und schleifenartig ausgebildet ist, und wobei der Lamellenblock (100, 100a) einstückig ausgebildet ist.

2. Lamellenblock (110, 100a) nach Anspruch 1, **dadurch gekennzeichnet, dass** der wenigstens eine Kanal (130, 130a) innerhalb des Lamellenblocks (100) derart ausgebildet ist, dass der wenigstens eine Kanal (130, 130a) einem vorgegebenen Pfad folgt.

3. Lamellenblock (100, 100a) nach einem der vorhergehenden Ansprüche, **dadurch gekennzeichnet, dass** der wenigstens eine Kanal (130, 130a) einen variablen Querschnitt aufweist.

4. Lamellenblock (100, 100a) nach einem der vorhergehenden Ansprüche, **dadurch gekennzeichnet, dass** sich der wenigstens eine Kanal (130, 130a) im Lamellenblock (100, 100a) an einer vorgegebenen ersten Position im Lamellenblock (100, 100a) in zwei oder mehrere Teilkanäle (131, 133) aufteilt.

5. Lamellenblock (100, 100a) nach Anspruch 4, **dadurch gekennzeichnet, dass** sich die zwei oder mehreren Teilkanäle (131, 133) an einer vorgegebenen zweiten Position im Lamellenblock (100, 100a) wieder zu einem Kanal vereinigen.

6. Lamellenblock (100, 100a) nach einem der vorhergehenden Ansprüche, **dadurch gekennzeichnet, dass** der Lamellenblock (100, 100a) ferner eine Trägerstruktur (120) aufweist, an der die Lamellen (112) der Lamellenstruktur (110) befestigt sind, wobei der wenigstens eine Kanal (130, 130a) in der Trägerstruktur (120) ausgebildet ist.

7. Lamellenblock (100, 100a) nach einem der vorhergehenden Ansprüche, **dadurch gekennzeichnet, dass** der wenigstens eine Kanal (130, 130a) Teil eines Temperierkreislaufs ist, wobei der wenigstens eine Kanal (130, 130a) zwei gegenüberliegende Austrittsöffnungen (132, 134) aufweist, an denen Anschlusselemente vorgesehen sein können, die zur fluidischen Kopplung mit dem Temperierkreislauf ausgebildet sind.

8. Lamellenblock (100, 100a) nach einem der vorhergehenden Ansprüche, **dadurch gekennzeichnet, dass** der Lamellenblock (100, 100a) mittels 3D-Druck bzw. mittels eines additiven Fertigungsverfahrens hergestellt ist.

9. Kalibriereinrichtung (500) zur Kalibrierung von extrudierten Profilen, umfassend eine Vielzahl von Lamellenblöcken (100) gemäß einem der Ansprüche 1 bis 8, wobei die Lamellenblöcke (100) zur Bildung einer Kalibrieröffnung zueinander angeordnet sind.

10. Kalibriereinrichtung (500) nach Anspruch 9, wobei die Kalibriereinrichtung (500) eine Vielzahl von Betätigungseinrichtungen (520) umfasst, wobei jede Betätigungseinrichtung (520) jeweils mit einem Lamellenblock (100, 100a) gekoppelt ist, um einen jeden Lamellenblock (100, 100a) individuell zu betätigen.

11. Kalibriereinrichtung (500) nach Anspruch 9 oder 10, ferner umfassend eine Temperiereinrichtung, welche mit dem wenigstens einen Kanal (130, 130a) fluidisch gekoppelt ist.

12. Verfahren zum Herstellen eines Lamellenblocks (100) gemäß einem der Ansprüche 1 bis 8, umfassend den Schritt des Herstellens des Lamellenblocks (100) mittels 3D-Druck bzw. mittels additiver Fertigung.

13. Verfahren nach Anspruch 12, ferner umfassend Berechnen einer 3D-Lamellenblock-Geometrie, und Umwandeln der berechneten 3D-Lamellenblock-Geometriedaten in entsprechende Steuerbefehle für den 3D-Druck bzw. die additive Fertigung.

14. Verfahren zum Herstellen eines Lamellenblocks (100), die Schritte umfassend:
- Erstellen eines Datensatzes, welcher den Lamellenblock (100) nach einem der Ansprüche 1 bis 8 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100) fertigt.

15. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100) mit den Merkmalen nach einem der Ansprüche 1 bis 8 fertigt.

16. Computerlesbarer Datenträger, auf dem das Computerprogramm nach Anspruch 15 gespeichert ist.

17. Datensatz, welcher einen Lamellenblock (100) mit den Merkmalen nach einem der Ansprüche 1 bis 8 abbildet.

## Claims

1. A fin block (100, 100a) for calibrating an extruded profile (550) within a calibrating device (500), wherein the fin block (100, 100a) comprises a fin structure (110), which has a plurality of fins (112) which are spaced apart from one another by grooves (114) and are arranged in longitudinal direction (L) of the fin block (100, 100a), wherein the fin block (100, 100a) has at least one channel (130, 130a) for feeding a temperature-control fluid, wherein the at least one channel (130, 130a) is formed in an integrated and loop-like manner in the fin block (100, 100a), and wherein the fin block (100, 100a) is formed in one piece.

2. The fin block (110, 100a) according to Claim 1, **characterized in that** the at least one channel (130, 130a) is formed within the fin block (100) in such a way that the at least one channel (130, 130a) follows a predetermined path.

3. The fin block (100, 100a) according to one of the preceding claims, **characterized in that** the at least one channel (130, 130a) has a variable cross-section.

4. The fin block (100, 100a) according to one of the preceding claims, **characterized in that** the at least one channel (130, 130a) in the fin block (100, 100a) divides itself at a predetermined first position in the fin block (100, 100a) into two or more partial channels (131, 133).

5. The fin block (100, 100a) according to Claim 4, **characterized in that** the two or more partial channels (131, 133) unite again to form one channel at a predetermined second position in the fin block (100, 100a).

6. The fin block (100, 100a) according to one of the preceding claims, **characterized in that** the fin block (100, 100a) has, furthermore, a carrier structure (120) on which the fins (112) of the fin structure (110) are fastened, wherein the at least one channel (130, 130a) is formed in the carrier structure (120).

7. The fin block (100, 100a) according to one of the preceding claims, **characterized in that** the at least one channel (130, 130a) is part of a temperature-control circuit, wherein the at least one channel (130, 130a) has two opposite outlet openings (132, 134) at which connection elements can be provided, which are formed for the fluidic coupling with the temperature-control circuit.

8. The fin block (100, 100a) according to one of the preceding claims, **characterized in that** the fin block (100, 100a) is produced by means of 3D printing or respectively by means of an additive manufacturing method.

9. A calibrating device (500) for the calibrating of extruded profiles, comprising a plurality of fin blocks (100) according to one of Claims 1 to 8, wherein the fin blocks (100) are arranged with respect to one another for the formation of a calibration opening.

10. The calibrating device (500) according to Claim 9, wherein the calibrating device (500) comprises a plurality of actuating devices (520), wherein each actuating device (520) is coupled respectively with a fin block (100, 100a), in order to actuate each fin block (100, 100a) individually.

11. The calibrating device (500) according to Claim 9 or 10, further comprising a temperature-control device, which is fluidically coupled with the at least one channel (130, 130a).

12. A method for producing a fin block (100) according to one of Claims 1 to 8, comprising the step of producing the fin block (100) by means of 3D printing or respectively by means of additive manufacture.

13. The method according to Claim 12, further comprising calculating a 3D fin block geometry, and converting the calculated 3D fin block geometry data into corresponding control commands for the 3D printing or respectively the additive manufacture.

14. A method for producing a fin block (100), comprising the steps:
- establishing a data set which represents the fin block (100) according to one of Claims 1 to 8,
- storing the data set on a storage device or on a server; and
- inputting the data set into a processing device or a computer, which actuates a device for the additive manufacture in such a way that it manufactures the fin block (100) represented in the data set.

15. A computer program, comprising data sets, which with the reading of the data sets by a processing device or a computer causes it to actuate a device for additive manufacture in such a way that the device for additive manufacture manufactures a fin block (100) having the features according to one of Claims 1 to 8.

16. A machine-readable data carrier on which the computer program according to Claim 15 is stored.

17. A data set which represents a fin block (100) having the features according to one of Claims 1 to 8.

## Revendications

1. Bloc de lamelles (100, 100a) pour étalonner un profilé (550) extrudé au sein d'un dispositif d'étalonnage (500), dans lequel le bloc de lamelles (100, 100a) comprend une structure de lamelles (110), laquelle présente une pluralité de lamelles (112) qui sont éloignées l'une de l'autre par des rainures (114) et sont disposées dans le sens longitudinal (L) du bloc de lamelles (100, 100a), dans lequel le bloc de lamelles (100, 100a) présente au moins un canal (130, 130a) pour amener un fluide thermorégulateur, **caractérisé en ce que** l'au moins un canal (130, 130a) est intégré dans le bloc de lamelles (100, 100a) et est conçu en forme de boucle, et dans lequel le bloc de lamelles (100, 100a) est conçu d'un seul bloc.

2. Bloc de lamelles (100, 100a) selon la revendication 1, **caractérisé en ce que** l'au moins un canal (130, 130a) à l'intérieur du bloc de lamelles (100) est ainsi conçu que l'au moins un canal (130, 130a) suit un trajet prédéfini.

3. Bloc de lamelles (100, 100a) selon l'une des revendications précédentes, **caractérisé en ce que** l'au moins un canal (130, 130a) présente une section variable.

4. Bloc de lamelles (100, 100a) selon l'une des revendications précédentes, **caractérisé en ce que** l'au moins un canal (130, 130a) dans le bloc de lamelles (100, 100a) se divise en deux ou plusieurs canaux partiels (131, 133) à une première position prédéfinie dans le bloc de lamelles (100, 100a).

5. Bloc de lamelles (100, 100a) selon la revendication 4, **caractérisé en ce que** les deux ou plusieurs canaux partiels (131, 133) se réunissent à nouveau en un canal à une seconde position prédéfinie dans le bloc de lamelles (100, 100a).

6. Bloc de lamelles (100, 100a) selon l'une des revendications précédentes, **caractérisé en ce que** le bloc de lamelles (100, 100a) présente en outre une structure porteuse (120) sur laquelle sont fixées les lamelles (112) de la structure de lamelles (110), dans lequel l'au moins un canal (130, 130a) est formé dans la structure porteuse (120).

7. Bloc de lamelles (100, 100a) selon l'une des revendications précédentes, **caractérisé en ce que** l'au moins un canal (130, 130a) fait partie d'un circuit d'étalonnage, dans lequel l'au moins un canal (130, 130a) présente deux ouvertures de sortie (132, 134) opposées, sur lesquelles des éléments de raccordement peuvent être prévus qui sont conçus pour le couplage fluidique avec le circuit d'étalonnage.

8. Bloc de lamelles (100, 100a) selon l'une des revendications précédentes, **caractérisé en ce que** le bloc de lamelles (100, 100a) est fabriqué par procédé d'impression 3D, respectivement par un procédé de fabrication additive.

9. Dispositif d'étalonnage (500) pour étalonner des profilés extrudés, comprenant une pluralité de blocs de lamelles (100) selon l'une des revendications 1 à 8, dans lequel les blocs de lamelles (100) sont disposés les uns par rapport aux autres pour former une ouverture d'étalonnage.

10. Dispositif d'étalonnage (500) selon la revendication 9, dans lequel le dispositif d'étalonnage (500) comprend une pluralité de dispositifs d'actionnement (520), dans lequel chaque dispositif d'actionnement (520) est couplé respectivement à un bloc de lamelles (100, 100a) pour actionner un bloc de lamelles (100, 100a) respectif individuellement.

11. Dispositif d'étalonnage (500) selon la revendication 9 ou 10, comprenant en outre un dispositif d'étalonnage qui est couplé fluidiquement à l'au moins un canal (130, 130a).

12. Procédé de fabrication d'un bloc de lamelles (100) selon l'une des revendications 1 à 8, comprenant l'étape de fabrication du bloc de lamelles (100) par impression 3D, respectivement, par fabrication additive.

13. Procédé selon la revendication 12, comprenant en outre le calcul d'une géométrie 3D de bloc de lamelles et conversion des données de géométrie 3D de bloc de lamelles calculées en commandes correspondantes pour l'impression 3D, respectivement, la fabrication additive.

14. Procédé de fabrication d'un bloc de lamelles (100) qui comprend les étapes :
- de création d'un jeu de données qui représente le bloc de lamelles (100) selon l'une des revendications 1 à 8 ;
- d'enregistrement du jeu de données sur un dispositif de mémoire ou un serveur ; et
- de saisie du jeu de données dans un dispositif de traitement ou un ordinateur qui commande un dispositif de fabrication additive de façon à ce que celui-ci fabrique le bloc de lamelles (100) représenté dans le jeu de données.

15. Programme informatique comprenant des jeux de données qui, lorsque les jeux de données sont mis en mémoire par un dispositif de traitement ou un ordinateur, fait que celui-ci commande un dispositif de fabrication additive de façon à ce que le dispositif de fabrication additive fabrique un bloc de lamelles (100) ayant les caractéristiques selon l'une des revendications 1 à 8.

16. Support de données pouvant être lu sur ordinateur, sur lequel est enregistré le programme informatique selon la revendication 15.

17. Jeu de données qui représente un bloc de lamelles (100) ayant les caractéristiques selon l'une des revendications 1 à 8.
